# EUROPEAN PATENT SPECIFICATION

(11) **EP 3 916 500 B1**
(45) Date of publication and mention of the grant of the patent: **12.03.2025**
(21) Application number: 21173749.9
(22) Date of filing: 13.05.2021
(51) Int. Cl.: G05B 19/401

(54) **SYSTEM AND METHOD FOR CALIBRATING A ROBOTIC CELL**
SYSTEM UND VERFAHREN ZUR KALIBRIERUNG EINER ROBOTERZELLE
SYSTÈME ET PROCÉDÉ D'ÉTALONNAGE D'UNE CELLULE ROBOTIQUE

(30) Priority: 25.05.2020 IL 27491120
(43) Date of publication of application: 01.12.2021
(73) Proprietor: Metalix CAD/CAM Ltd., 20181 Misgav (IL)
(72) Inventor: BARUCH, Orit Lili, 20181 Misgav (IL); MAITAV, Menachem, 3003500 Ramat Yohanan (IL); SHIROKY, Itzhak, Rehovot (IL)
(74) Representative: Graham Watt & Co LLP

(56) References cited:
- JP-A- 2015 136 742
- JP-A- 2018 065 231
- US-A1- 2010 262 288
- US-A1- 2018 205 935
- BYSTRONIC: "Bystronic Automation Bending: Bending Cell (English)", YOUTUBE, 1 May 2020 (2020-05-01), pages 1 pp., XP054982322, Retrieved from the Internet <URL:https://www.youtube.com/watch?v=KudESdfUSAg&list=PLLFnOdKqLHL8hSGsIg5nQ5iEKefL-l7nq&index=7> [retrieved on 20211005]

## Description

### TECHNICAL FIELD

The present disclosure relates to robot-based production environments in general, and to a method and device for calibrating a robotic bending cell, in particular.

### BACKGROUND

A robotic bending cell may comprise a robot which may or may not travel along a rail, a press brake, an input station, such as an in-pallet, a conveyor belt or the like, from which a robot grips a sheet, such as a metal sheet to be bent, and an output station such as an out-pallet, a conveyor belt, a sack, a collecting vessel or the like, where the robot places the processed sheets . During the bending process the robot places the sheet to be bent in designated positions and orientations on the lower beam of a press brake for bending. A robotic bending cell typically comprises an orientation table that may be used at the beginning of processing a sheet for determining the exact location and orientation of the sheet in space. However, in some configurations, no orientation table may be present, and the robot may grip the sheet directly from the in-pallet or the conveyor belt, and move it to the press brake or to a regripping station. In other configurations, the orientation table may also be the input station. A robotic bending cell may also comprise a regripping station intended for placing a sheet such that the robot can grip it in a different location or angle for further bending.

Planning the processing of a particular design requires determining the gripping positions on the sheet and the trajectories of the robot, such that the robot can repeatedly grip a sheet, have it bent along the required lines by the press brake and output it.

The locations of the various components of the robotic cell are known. However, these locations are generally known to an insufficiently accurate level, and exact calibration may still need to be performed before starting to process sheets. Further calibration may also be required when any of the components is intentionally or unintentionally moved.

Calibrating a cell, i.e., measuring the exact positions in 3D space of all relevant surfaces, is a tedious job that requires high expertise and precision and may take a long time. Thus, this process may incur high costs that include the expert fees as well as the downtime of the machine. US2018205935A1 discloses a vision system with automatic calibration.

### BRIEF SUMMARY

The invention is set out in the appended set of claims.

### THE BRIEF DESCRIPTION OF THE SEVERAL VIEWS OF THE DRAWINGS

The present disclosed subject matter will be understood and appreciated more fully from the following detailed description taken in conjunction with the drawings in which corresponding or like numerals or characters indicate corresponding or like components. Unless indicated otherwise, the drawings provide exemplary embodiments or aspects of the disclosure and do not limit the scope of the disclosure. In the drawings:
Fig. 1A shows an illustration of a calibration block, in accordance with some exemplary embodiments of the disclosure;
Fig. 1B shows an illustration of a calibration pointer, in accordance with some exemplary embodiments of the disclosure;
Fig. 1C shows an illustration of another calibration block, in accordance with some exemplary embodiments of the disclosure;
Figs. 2A and 2B show two views of a schematic illustration of a robotic cell, in accordance with some exemplary embodiments of the disclosure;
Fig. 3 shows a flowchart of steps in a method to be performed by a user for calibrating a robotic cell, in accordance with some exemplary embodiments of the disclosure;
Fig. 4 shows a flowchart of steps for calibrating a robotic cell, in some exemplary embodiments of the disclosure; and
Fig. 5 shows a block diagram of a system configured for calibrating a robotic cell, in accordance with some exemplary embodiments of the disclosed subject matter.

### DETAILED DESCRIPTION

One technical problem related to the disclosure is a need to calibrate a robotic cell in a fast and inexpensive manner, which does not require special expertise.

A robotic bending cell may comprise a robot which may or may not travel along a rail, a press brake, an input station, such as an in-pallet, a conveyor belt or the like, from which a robot grips a sheet, such as a metal sheet to be bent, and an output station such as an out-pallet, a conveyor belt, a sack, a collecting vessel or the like, where the robot places the processed sheets. During the bending process the robot places the sheet to be bent in designated positions and orientations on the lower beam of a press brake for bending. A robotic bending cell typically comprises an orientation table that may be used at the beginning of processing a sheet for determining the exact location and orientation of the sheet in space. However, in some configurations, no orientation table may be present, and the robot may grip the sheet directly from the in-pallet or the conveyor belt, and move it to the press brake or to a regripping station. In other configurations, the input station may also be the orientation table. A robotic bending cell may also comprise a regripping station intended for placing a sheet such that the robot can grip it in a different location or angle for further bending.

The robotic cell may also comprise a controller for receiving the current location and position of the robot, and for controlling the robot movement towards a target location or along a designed trajectory.

A robotic cell may comprise or be in communication with a pendant, also referred to as a robot teach pendant. A pendant is a handheld control and programming unit. A pendant may be used for manually sending the robot to a desired position or orientation, changing the speed or the like. A pendant may also be used for reading and displaying the robot position. A pendant may also be used for loading and running externally generated programs for the robot. A pendant may also comprise an emergency stop button.

A trajectory of the robot between two components, with or without a gripped sheet, may be learned, or planned by a processing unit such as a processor. The processing unit may be associated with the robotic cell or external thereto.

Planning the processing of a particular design comprises determining the relative locations of the components of the robotic cell, wherein each such location may be described as the location of a particular point of the component, such as the bottom corner of the orientation table, and the orientation of a particular surface of the component. Planning further comprises determining one or more trajectories the robot needs to travel, or position and orientation changes required for performing different bends, such that the robot can repeatedly grip a sheet and have it bent along the correct lines by the press brake.

Given the positions of the components of the robotic cell, it is still required to accurately calibrate the robotic cell. Further calibration may also be required when any of the components is intentionally or unintentionally moved.

Currently, such calibration may be a long and costly job, thus there is a need to provide an accurate as well as easy, fast and inexpensive manner for calibrating a robotic cell.

One technical solution comprises a calibration block having a planar member or area, and optionally one or more members or areas that enable placement on a press brake or another component of the robotic cell. The planar area may have at least one corner, such as a right angled corner. The planar area may comprise three designated positions marked by elements such as bores, etching or other graphic or physical method, the locations of which form a triangle. In some embodiments, the triangle may be a right-angled triangle. The element marking the right angle may be the closest to a corner of the calibration block. During the calibration process, the locations of the elements are determined by touching or otherwise interacting with, by a location pointer, also referred to as calibration pointer, calibration tool or the like. In further embodiments, other technologies may be used for indicating the locations, such as laser pointing, obtaining the location from an image taken by a camera, or the like.

The locations of the three marking elements relative to a fixed point of the calibration block, such as a corner thereof, as well as the parameters of the location pointer, e.g., length and tip radius, may be provided using the UI to the computing device, for executing the calculation module.

The solution further comprises executing by a computing device a module for calculating the position and orientation of a specific surface of a component of the robotic cell on which the calibration block is positioned, based on the locations of the elements. The solution may further comprise a user interface (UI), such as a Graphic User Interface (GUI) for entering parameters and measurements related to the calibration process.

In order to calibrate the cell, the calibration pointer needs to be mounted on the robotic arm, and the calibration block may then be placed in specific locations on the components of the robotic cell that need to be calibrated.

For example, the calibration block may be placed on the orientation table. The locations of the three marking elements may be taken as follows: the robotic arm with the mounted calibration pointer is moved using the teaching pendant to each of the three marking elements in a predefined order. The position that is displayed on the teaching pendant at each position, is provided to the system using the UI. From these locations, the position and orientation of the surface of the orientation table on which the calibration block is placed, in a specific coordinate system, for example a coordinate system of the robot, may be obtained.

A calibration block, which may be the same as the calibration block used for calibrating the orientation tale or a different one, may then be placed in a predetermined location and orientation on another member of the robotic cell, for example the press brake. The locations of the three marking elements may be taken using the calibration pointer, as described above. From the measurements, the absolute position and orientation of the press brake, in the same coordinate system of the robot may be obtained. A transition between the fixed points and orientations of the orientation table and the press brake (or any other two components of the robotic cell) can be obtained by applying transition and rotation transformations in the three-dimensional space.

One technical effect of the disclosure comprises the fast and efficient process for obtaining the actual position and orientation of the various components of the robotic cell. The process does not require special expertise and can take, for example, under one day or even under one hour, in contrast to prior art methods which may take laborious weeks or more of experts.

Additionally or alternatively, trajectories used by the robot for moving a sheet from one component of the cell to another may be automatically, semi-automatically or manually calculated or updated in accordance as the accurate positions and orientations of the cell components become available.

The required calibration block is simple and inexpensive to manufacture, and may be used for multiple calibrations of the robotic cell, for processing items of one or more types.

Although the disclosure focuses on bending robotic cells, it will be appreciated that it is merely an example, and the disclosure can be applied to any robot-based production environment, such as but not limited to milling, welding, painting, cutting, tapping, forming, stacking, or the like.

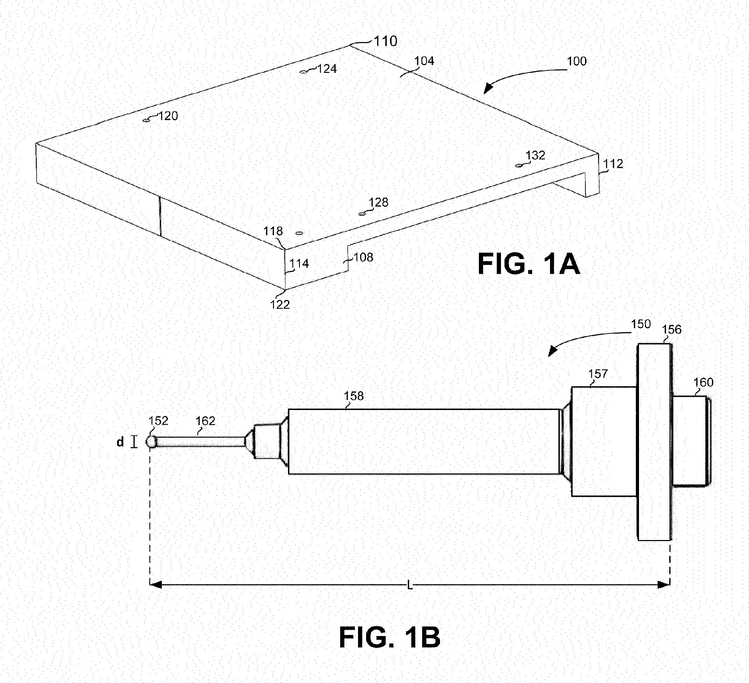

Referring now to Fig. 1A, showing an illustration of a calibration block, in accordance with some embodiments of the disclosure.

The calibration block, generally referenced 100 may comprise a planar area 104, which may or may not be rectangular. The calibration block may comprise one or more gripping areas 108 and/or 112. Gripping areas 108 and 112 may be used for attaching the calibration block to the clamping system of the press brake. Thus, each of gripping areas 108 and 112, and possibly additional gripping areas, can be adjusted to a clamping system of a different standard

The calibration block may comprise at least one edge 114 connecting corners 118 of a right angle of plane 104 and corner 122 of an opposite plane of gripping area 108 and/or 112. One point of the calibration block, for example corner 118 may be selected as a reference point of the block. Edge 114 represents the height of the calibration block 100 at corner 118. Corner 118 can serve as a reference point in a method for calibrating a robotic cell, as will be further elaborated herein below.

In general, a calibration block may comprise three marking elements, also referred to as elements, defining the corners of a triangle, for example a right-angled triangle, such that the element located on the right angle (or another predetermined angle) is the nearest of the elements to the reference point of the calibration block. The three elements are used to determine the surface of the plane of the component of the robotic cell on which the calibration block is placed, with respect to a predefined coordinate system. The elements may be implemented as bores, etching or other graphic, volumetric, or physical method. The bores may have the same structure and dimensions, e.g., a round opening having the same radius and the same depth.

It will be appreciated that a calibration block in accordance with the disclosure may comprise more than three elements, such that the elements form multiple triangles. In particular, two or more right angled triangles may be formed by different element triplets, with reference to the same reference point or to different reference points of the block. Thus, if corner 118 is selected as the reference corner, elements 128,120 and 132 define the corners of a right angled triangle as explained above, and may be used for the calibration process. If, in another example, corner 110 is selected as the reference corner, elements 124, 132 and 120 define the corners of a right-angled triangle. Such plurality of options for triangles may provide for more convenient access to the elements when calibrating various components of one or more robotic cells.

The relative positions of these elements to the reference point of the calibration block, and the relative position of this corner to the reference point of the component, may be used to determine the location of this point in 3D space.

The calibration block may be made of sturdy material such as metal and therefore relatively heavy. However, to allow for better accuracy in the calculation of resulting measurement, the distances between the marking elements should be as large as possible, thus implying that the board should be made as large as possible. However, the board still needs to be supportable by the relevant component, which may limit its size.

The calibration block may be made of milled metal, which may ensure that the block with the marking elements and the gripping areas is manufactured accurately as designed.

Referring now to Fig. 1B, showing an illustration of a calibration pointer, in accordance with some embodiments of the disclosure. The calibration pointer may be mounted on the robot arm, and the robot arm may be moved to the marking elements of the calibration board when the calibration board is mounted on various components of the robotic cell. The locations of the marking elements may then be displayed on the teaching pendant. The position and the orientation of a surface of each such component may then be determined.

It will be appreciated that the calibration pointer needs to correspond to the marking elements. For example, when using bores as marking elements the calibration pointer needs to be easily insertable in a perpendicular position into any of the bores, but should not have significant movement freedom therein.

The calibration pointer, generally referenced 150 is designed to be mounted on a robot arm, and thus comprises an attachment base flange 156 configured for attachment to the robot arm, for example by being inserted and/or screwed into a corresponding sink or receiving bores of the robot arm. The pointer may further comprise a tang 160 extending from the base flange 156 in the direction of the robot, a body comprised of cylinders 157 and 158 extending from the base flange 156 in direction opposite to the robot, and an elongated bit 162 extending from the body 158, and ending with a tip 152, which may be substantially ball-shaped and of larger diameter than extension 162.

It will be appreciated, however, that any other calibration pointer can be used as long as it can distinctly indicate a location on the calibration block. In some embodiments, a specific point of the robot or any of the tools used by the robot may be used as a calibration tool, rather than a dedicated tool. In further embodiments, the location may be obtained without touching the locations, for example by a pointing device such as a laser pointer, by analyzing an image, or the like.

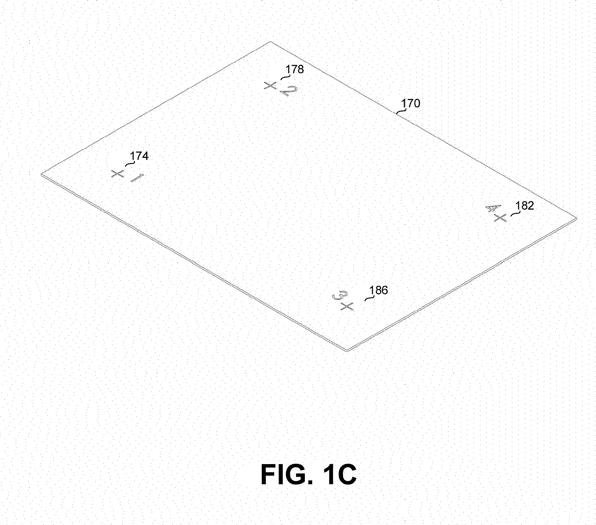

Referring now to Fig. 1C, showing a calibration block 170 in which the elements, 174, 178, 182 and 186 are implemented as etched crosses, such that the location of each element is the center of the cross. The elements are arranged such that their locations create one or more right-angled triangles. Calibration block 170 may be flat and comprise no gripping elements. This embodiment may be particularly suitable for calibrating a regripping station.

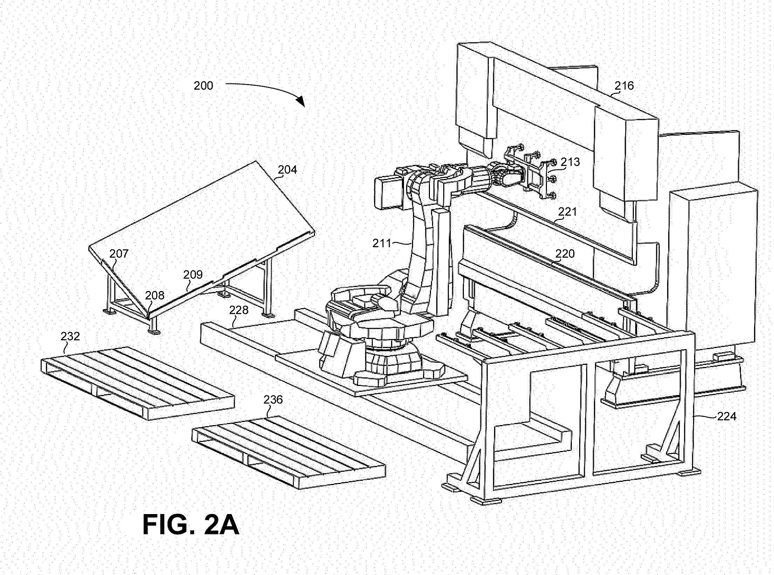

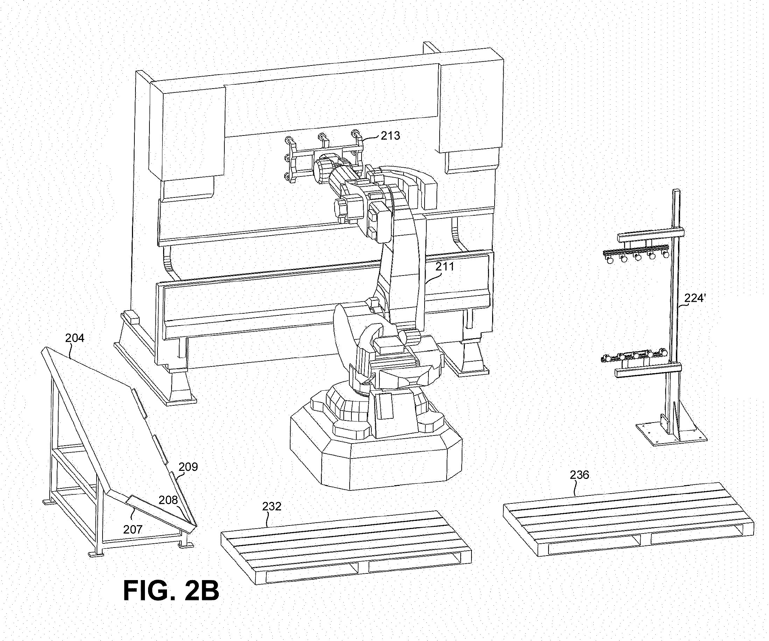

Referring now to Figs. 2A and 2B, showing two schematic views of a robotic cell, in which the calibration block and method may be used, in accordance with some exemplary embodiments of the disclosure. Figure 2A shows view of a robotic cell utilizing a rail to further the reach of the robot, while Fig. 2B shows a view of another robotic cell which does not utilize such a rail.

A typical robotic cell, generally referenced 200, may comprise an orientation table 204. Orientation table 204 may comprise a planar area inclined in two planes, such that one corner 208 thereof is lower than all others, or another member for sliding a sheet placed on orientation table 204, such as a ball-bearings or polymer strips. More specifically, orientation table 204 is angled relative to both a plane parallel to the ground supporting the robotic cell 200, and to a plane perpendicular to ground. The lower edges of the planar area may be bounded by boundaries 207 and 209. This structure enables the accurate and firm placing on orientation table 204 of a sheet to be processed, and also of the calibration block during calibration of robotic cell 200.

Robotic cell 200 may comprise a robot 211. Robotic cell 200 may or may not comprise rail 228 upon which robot 211 may move. Robot 211 may have attached thereto gripper 213 which may comprise vacuum cups, mechanical clamping lips, magnetic bodies or another attachment mechanism for gripping a sheet. Robot 211 may comprise multiple links, wherein two adjacent links may be connected by a joint. The joints may have 6 degrees of freedom: three degrees of freedom describing its x-y-z position in the three-dimensional space, and three degrees describing its orientation, described for example as yaw, roll and pitch.

Robotic cell 200 may comprise a press brake 216, comprising a lower beam 220 and upper beam 221. The processed sheet may be placed by robot 211 on lower beam 220, and is bent after upper beam 221 descends toward it and is pressed there-against.

Robotic cell 200 may comprise an in-pallet 232 from which robot 211 may take a sheet to be processed, and may place it on orientation table 204. However, in other configurations or other robotic cells, the orientation table and the in-pallet may be implemented as one component.

Robotic cell 200 may comprise an out-pallet 236 on which robot 211 may place the sheet after having gone through all required bending actions.

Robotic cell 200 may comprise a regripping station 224. The processed sheet may be attached by robot 211 to regripping station 224, such that robot 211 may grip it in a different manner, for example in a different area or from a different direction, to enable further bending thereof or outputting it to the out-pallet 236. Regripping station 224 may have a regripping area defined by its width *w* 216 and depth *h* 215.

Robot 211 having gripper 213 at its tip may be programmed to move with or without a sheet gripped by gripper 213 between the various components of robotic cell 200.

For example, robot 211 may be programmed such that gripper 213 grips a sheet from in-pallet 232, and places it on orientation table 204. Due to the inclination of orientation table 204, the sheet can slide downward until its lowest corner is at corner 208 and the sheet is accurately positioned. Robot 211 may then carry the sheet to press brake 216 and place it on lower beam 220. Robot 211 may need to place the sheet on regripping station 224 before it can be placed on lower beam 220. Once the sheet is bent, robot 211 may do any of the following: change the position of the processed sheet on lower beam 220; change the gripping position of gripper 213 on the processed sheet; carry the sheet to regripping station 224 and then grip it again and carry it back to lower beam 220 or to out-pallet 236; replace the gripper using a "gripper changing" station, replace tools on the machine using a "tool changing" station, or others.

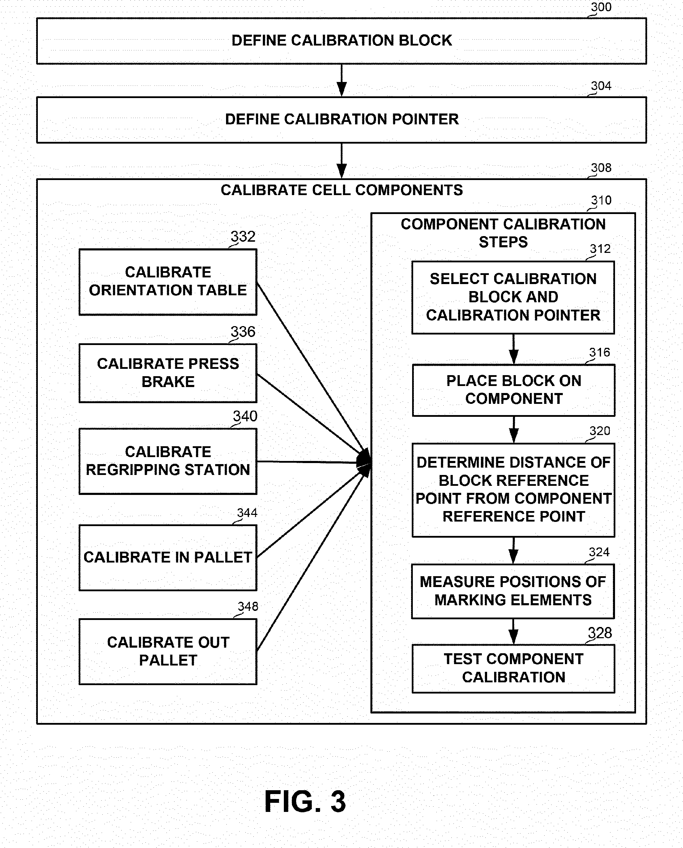

Referring now to Fig. 3, showing a flowchart of steps in a method to be performed by a user for calibrating a robotic cell, in accordance with some embodiments of the disclosure.

On step 300, a user may define the calibration block 100, e.g. associate a block name or another identifier with its parameters. The user may enter the parameters of the calibration block, including the X and Y locations of the three elements 128, 120 and 132 relative to a reference point, such as reference point 118 of board 100, and height 114 of the block at reference point 118.

The user may also enter the elements parameters, such as the diameter and depth of bores.

On step 304, the user may define the calibration pointer 150, i.e. associate a pointer name or another identifier with its parameters. The user may enter the parameters of the calibration pointer, including its length L, measured for example from the end of base 156, at the border with attachment portion 160, to the center of tip 152, and the tip's diameter d.

It will be appreciated that multiple calibration blocks and corresponding calibration pointers, associated with various sets of parameters, may be defined.

On step 308, the various components of the robotic cell may be calibrated. Calibration of each component may be performed using one of the defined calibration blocks 100, wherein different blocks 100 may be used for calibrating different components of the same robotic cell 200.

Steps 310 detailed below describe the general calibration process of each of the robotic cell components.

Thus, calibrating each component may comprise step 312 of selecting from a user interface the calibration block 100 and calibration pointer 150 to be used for calibrating the specific component. The calibration block and calibration pointer may be selected using a drop-down list of a graphic user interface, the list containing the blocks 100 and pointers 150 defined in the system.

Calibration of a component may further comprise step 316 of placing the block 100 at a predetermined position on the component, and step 320 for entering the distance from the block's reference point, such as corner 118, to the component reference point into the system via the UI.

Calibration of a component may further comprise step 324 of determining the locations of the marking elements of the calibration block 100 when the block 100 is positioned on the component. Determining may be performed using a pendant receiving readings from robot 211. The coordinates of the marking elements should be provided in the same order as when the calibration block was defined, such that each marking elements is associated with the corresponding coordinates.

Calibration of a component may further comprise step 328 of testing the component calibration. Testing may comprise planning and executing one or more tests, wherein the desired result of any test, is that robot 211 gets to the target location or locations.

A possible test is a program-to-point test in which it is tested whether the robot can reach an arbitrary point. Thus, the user can enter specific coordinates or graphically select a point from an image of the component using a pointing device, and a direction of robot 211. A test program can then be generated for robot 211 to get to that point. The system can then run the program and check whether robot 211 indeed arrived at the correct location and at the correct direction. This test, which may be performed without the calibration block, checks whether the calibration has indeed placed the component in a correct place in the coordinate system.

It will be appreciated that steps 312, 316, 320, 324 and 328 detailed above are performed for calibrating each required component of the robotic cell, as detailed below. However, for some components some of the steps may be omitted.

On step 332, the orientation table 204 may be calibrated. Calibration may comprise selecting (312) calibration block 100 and pointer 150, placing (316) calibration block 100 on table 204, with reference point 118 at corner 208 of the orientation table 204, such that the block 100 is stably and repeatably located on the orientation table 204. In some embodiments, it may be recommended to use a dedicated block 100 for calibrating orientation table 204. The distance of the block reference point from the component reference point may be determined (320) as height 114 of the block. The positions of the marking elements may then be determined (324) using calibration pointer 150 mounted on robot 211 and reading the coordinates from the pendant, and the calibration of orientation table 204 may be tested (328).

On step 336, the press brake 216 may be calibrated. Calibration may comprise selecting (312) calibration block 100 and pointer 150, placing (316) calibration block 100 on lower beam 220 of press brake 216. The distances of block reference point 118 from the top of the machines clamping system and the machine's center may be determined (320). The positions of the marking elements may then be measured (324) using the calibration pointer 150 mounted on robot 211 and the pendant, and calibration of the press brake 216 may be tested (328).

On step 340, the regripping station 224 may be calibrated. Calibration may comprise selecting (312) calibration block 100 and pointer 150. In some embodiments, it may be recommended to use a dedicated block 100 for calibrating regripping station 224, wherein block 100 may be large enough to be placed securely on regripping station 224. Generally, the calibration block should be as large as possible, wherein the size and positioning on the regripping station may be determined mostly by the size and geometry of the station, including the type of the attachment mechanism.

The calibration block may be placed (316) on regripping station 224. The distances of the block reference point 118 from the center of the regripping area of regripping station 224 may be determined (320). The positions of the marking elements may then be measured (324) using the calibration pointer 150 mounted on robot 211 and the pendant.

On step 344 the in-pallet 232 may be calibrated and on step 348 the out-pallet 236 may be calibrated, however, steps 344 and 348 may be omitted in some situations. When required, calibration of the in-pallet 232 and the out-pallet 236 may comprise selecting (312) the calibration block 100 and pointer 150, placing (316) calibration block 100 on the respective pallet, determining (320) the distance of block reference point 118 from a reference point of the pallet, and measuring (324) the positions of the marking elements using calibration pointer 150 mounted on robot 211.

Additional cell components, such as a gripper replacement station, may be calibrated in a similar manner.

The steps above indicate actions performed by a user calibrating the robotic cell 200.

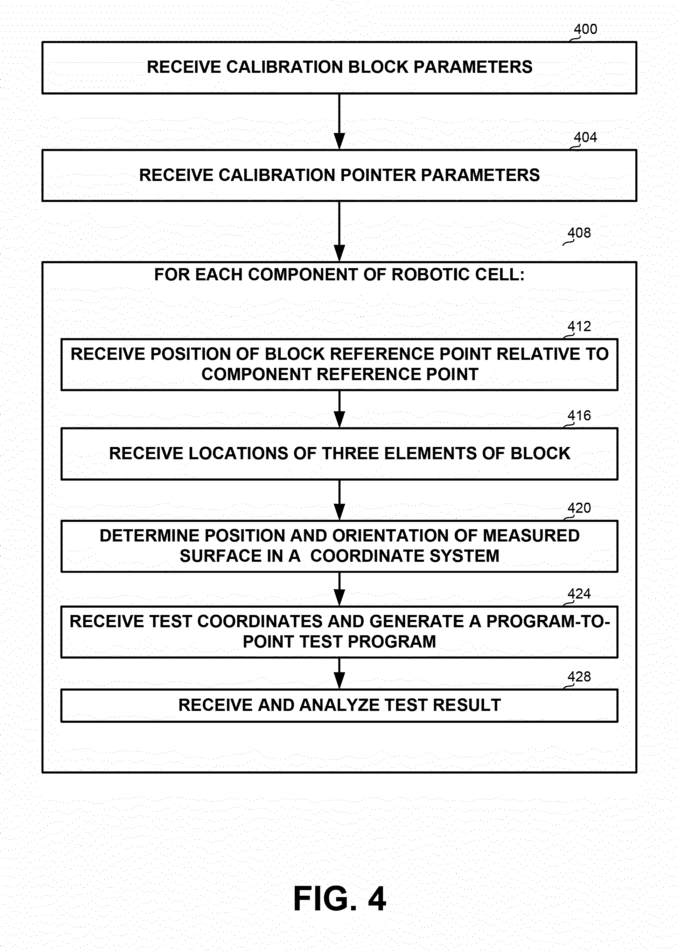

Reference is now made to Fig. 4, showing a flowchart of steps for calibrating a robotic cell 200, in some embodiments of the disclosure.

On step 400, the parameters of one or more calibration blocks 100 may be received and stored, including the locations of the three marking elements relative to a reference point, and the radius and depth of the marking elements.

On step 404, the parameters of one or more calibration pointers 150 may be received and stored, such as the length and radius.

Calibration process 408 may be performed during the calibration of each component of the robotic cell 200 that is being calibrated.

On step 412, a calibration block 100 may be selected, and the location of the reference point of calibration block 100 relative to a reference point of the component may be received from a user via the UI.

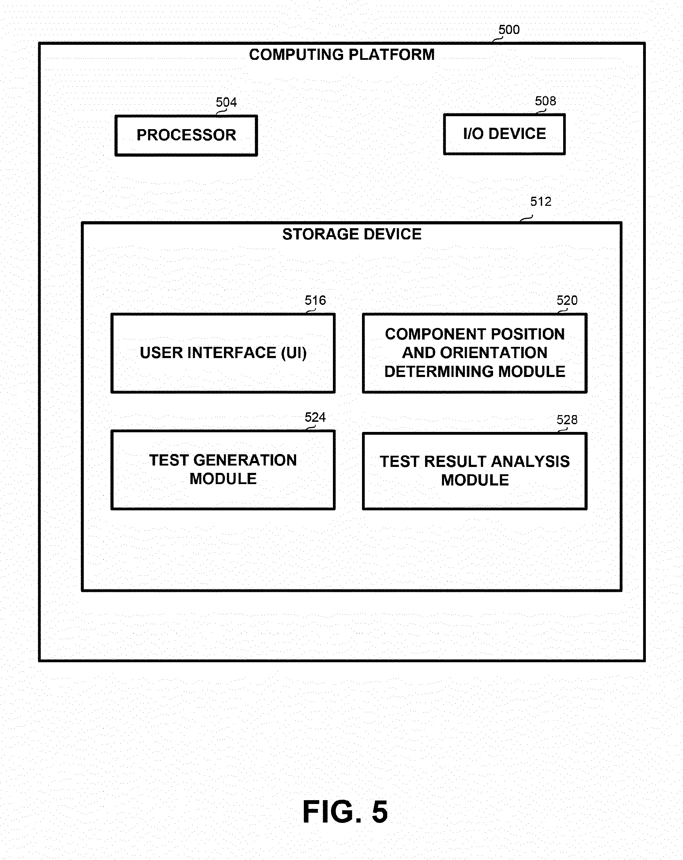

On step 416, the coordinates of three marking elements of the block may be received. The coordinates may be received directly from a pendant, e.g. through a communication channel connecting the robot controller and a processor executing the calibration, as detailed in association with Fig. 5 below, or by the user using a user interface for entering the coordinates as displayed by the pendant.

On step 420, the position of the reference point of the component, and orientation of the referenced surface of the component may be determined using the calibration block and pointer parameters, the measured locations of the three marking elements, and the position of the reference point of calibration block 100 relative to the position of the component. It will be appreciated that determining the orientation of the reference surface of the component is enabled also by knowing the relative orientation of this surface, and the planar area comprising the marking elements of the calibration block. For example, when calibrating the orientation table, calibration block 100 is parallel to the orientation table; when calibrating press brake 216, calibration block 100 may be parallel to the top surface of lower beam 220, etc. The position and orientation of the component may be determined using standard three-dimensional geometric calculation, such as translation and rotation.

On step 424, coordinates of a point, and a direction from which the robot 211 has to reach the point may be received from a user through a user interface, and a test program may be generated and stored. The test may be a program-to-point test. The test may be performed by using the robot to run the generated program.

On step 428, after the user has run the test, the test results, including the position and direction of robot 211 may be received and analyzed, for example whether robot 211 has reached the surrounding of the intended point and at what accuracy.

It will be appreciated that defining and checking the results of the test may involve additional parameters, such as direction, velocity, acceleration, or the like.

Reference is now made to Fig. 5, showing a block diagram of a system for calibrating a robotic cell 200, in some embodiments of the disclosure.

The system may comprise one or more computing platform 500. In some embodiments, Computing platform 500 may be a server, a desktop computer, a laptop computer, or the like. Additionally, or alternatively, computing platform 500 may be a part of a controller or a processor of robotic cell 200, such that the components detailed below are implemented as part of the controller or processor.

Computing platform 500 may communicate with other computing platforms via any communication channel, such as a Wide Area Network, a Local Area Network, intranet, Internet, transfer of memory storage device, or the like.

Computing platform 500 may comprise a processor 504 which may be one or more Central Processing Units (CPU), a microprocessor, an electronic circuit, an Integrated Circuit (IC) or the like. Processor 504 may be configured to provide the required functionality, for example by loading to memory and activating the modules stored on storage device 512 detailed below.

It will be appreciated that computing platform 500 may be implemented as one or more computing platforms which may be operatively connected to each other. It will also be appreciated that processor 504 may be implemented as one or more processors, whether located on the same platform or not.

Computing platform 500 may comprise Input/Output (I/O) device 508 such as a display, a speakerphone, a headset, a pointing device, a keyboard, a touch screen, or the like. I/O device 508 may be utilized to receive input from and provide output to a user, for example receive or display marking elements coordinates or other measures.

Computing Platform 500 may comprise a storage device 512, such as a hard disk drive, a Flash disk, a Random Access Memory (RAM), a memory chip, or the like. In some exemplary embodiments, storage device 512 may retain program code operative to cause processor 504 to perform acts associated with any of the modules listed below, or steps of the methods of Fig. 4 above. The program code may comprise one or more executable units, such as functions, libraries, standalone programs or the like, adapted to execute instructions as detailed below.

Storage device 512 may comprise user interface (UI) 516, for example a graphic user interface (GUI) for receiving from the user definitions, values or measurements, such as calibration block identifier, marking elements locations, calibration pointer definitions, or the like. UI 516 may also be used for displaying to a user data or information, such as positions and orientations of a component, whether a test has passed or failed, or the like.

Storage device 512 may comprise component position and orientation determining module 520, for determining the position and orientation of a component of robotic cell 200, based on the calibration block marking elements distances from the block reference point, the reported locations of the marking elements, and the position of the block reference point relative to the component reference point.

Storage device 512 may comprise test generation module 524 for generating a program-to-point test, in which robot 211 has to arrive to a given point and in a given attitude.

Storage device 512 may comprise test results analysis module 528, for receiving test results, e.g., the actual points to which robot 211 has arrived at when it was supposed to arrive at a destination point, and determining whether the test has passed or failed.

It will be appreciated that the module description above is exemplary only, that the modules may be arranged differently, and that the division of tasks between the modules may be different.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A system comprising:
a calibration block (100, 170) having a planar area, the planar area comprising at least three marking elements (128, 120, 132), located at three corners of at least one triangle; and
a computing platform (500) comprising a processor (504) used for calibrating a robot-based production environment (200) comprising at least a first component,
wherein the processor (504) is adapted to:
receive (400) parameters of the calibration block (100, 170), being locations of the marking elements (128, 120, 132) relative to a reference point (118) of the calibration block;
receive (412) a position of the calibration block reference point (118) relative to a component reference point (208) of a first component of the robot-based production environment on which the calibration block (100, 170) is placed at a predetermined position;
receive (416) a set of locations of the at least three marking elements of the calibration block taken when the calibration block (100, 170) is positioned on the first component, the set of locations taken by a calibration tool (150) being placed on the at least three marking elements (128, 120, 132) in a predefined order and in a coordinate system of the robot-based production environment (200); and
based on the parameters, the position and the set of locations, determine (420) a position and orientation of the first component in a coordinate system of the robot-based production environment.

2. The system of Claim 1, wherein the marking elements (128, 120, 132) are bores.

3. The system of Claim 1 or Claim 2, wherein the received parameters of the calibration block comprise a radius and depth of the marking elements (128, 120, 132).

4. The system of Claim 1, wherein the triangle is a right-angled triangle.

5. The system of Claim 1, wherein the calibration tool (150) is a laser pointer.

6. The system of Claim 1, wherein the robot-based production environment (200) is a robotic bending cell, and the first component is selected from the group comprising: an orientation table (204), a press brake (216), a regripping station (224), a gripper changing station, a tool changing station, an in-pallet (232) and an out-pallet (236), and optionally wherein the robotic bending cell further comprises a rail (228).

7. The system of Claim 1, wherein the processor is further adapted to generate a test for testing whether a robot operating in the robot-based production environment (200) can reach a target point of the first component.

8. A method performed by a processing platform, the method comprising:
receiving (400) parameters of a calibration block (100, 170) having a planar area, the planar area comprising at least three marking elements (120, 128, 132) located at three corners of at least one triangle, the parameters being locations of the marking elements (128, 120, 132) relative to a calibration block reference point (118) of the calibration block;
receiving (412) a position of the calibration block reference point (118) relative to a component reference point (208) of a first component of a robot-based production environment on which the calibration block (100, 170) is placed at a predetermined position;
receiving (416) a set of locations of the at least three marking elements (120, 128, 132) of the calibration block taken when the calibration block (100, 170) is positioned on the first component, the set of locations taken by a calibration tool (150) being placed on the at least three marking elements (120, 128, 132) in a predefined order and in a coordinate system of the robot-based production environment (200); and
based on the parameters, the position and the set of locations, determining (420) a position and orientation of the first component in a coordinate system of the robot-based production environment.

9. The method of Claim 8, wherein the marking elements (128, 120, 132) are bores.

10. The method of Claim 8 or Claim 9, wherein the received parameters of the calibration block comprise a radius and depth of the marking elements (128, 120, 132).

11. The method of Claim 8, wherein the triangle is a right-angled triangle.

12. The method of Claim 8, further comprising analyzing an image captured by a capture device for obtaining the set of locations.

13. The method of Claim 8, further comprising generating a program for transition of a robot (211) between two positions within the robot-based production environment, in which the robot (2110) places a processed sheet on the press brake (216), or optionally

14. the method further comprises repeating said receiving (400) the parameters, said receiving (412) the position, said receiving (416) the set of locations, and said determining (420), for a second component of the robot-based production environment.

15. The method of Claim 8, further comprising generating (424) a test for testing whether a robot (211) operating in the robot-based production environment (200) can reach a target point of the first component.

16. A computer program product comprising a non-transitory computer readable medium retaining program instructions, which instructions when read by a processor, cause the processor to perform:
receiving (400) parameters of a calibration block (100, 170) having a planar area, the planar area comprising at least three marking elements (128, 120, 132) located at three corners of at least one triangle, the parameters being locations of the marking elements (128, 120, 132) relative to a calibration block reference point (118) of the calibration block;
receiving (412) a position of the calibration block reference point (118) relative to a component reference point (208) of a first component of a robot-based production environment on which the calibration block (100, 170) is placed at a predetermined position;
receiving (416) a set of locations of the at least three marking elements of the calibration block taken when the calibration block (100, 170) is positioned on the first component, the set of locations taken by a calibration tool (150) being placed on the at least three marking elements (128, 120, 132) in a predefined order and in a coordinate system of the robot-based production environment (200); and
based on the parameters, the position and the set of locations, determining (420) a position and orientation of the first component in a coordinate system of the robot-based production environment.

## Patentansprüche

1. System, umfassend:
einen Kalibrierungsblock (100, 170) mit einer ebenen Fläche, wobei die ebene Fläche mindestens drei Markierungselemente (128, 120, 132) umfasst, die an drei Ecken von mindestens einem Dreieck angeordnet sind; und
eine Rechenplattform (500), die einen Prozessor (504) umfasst, der zum Kalibrieren einer roboterbasierten Produktionsumgebung (200) verwendet wird, die mindestens eine erste Komponente umfasst,
wobei der Prozessor (504) geeignet ist zum:
Empfangen (400) von Parametern des Kalibrierungsblocks (100, 170), bei denen es sich um Orte der Markierungselemente (128, 120, 132) relativ zu einem Referenzpunkt (118) des Kalibrierungsblocks handelt;
Empfangen (412) einer Position des Kalibrierungsblockreferenzpunkts (118) relativ zu einem Komponentenreferenzpunkt (208) einer ersten Komponente der roboterbasierten Produktionsumgebung, auf der der Kalibrierungsblock (100, 170) an einer vorbestimmten Position platziert ist;
Empfangen (416) einer Gruppe von Orten der mindestens drei Markierungselemente des Kalibrierungsblocks, die eingenommen werden, wenn der Kalibrierungsblock (100, 170) auf der ersten Komponente positioniert ist, wobei die Gruppe von Orten, die von einem Kalibrierungswerkzeug (150) eingenommen werden, in einer vorbestimmten Reihenfolge und in einem Koordinatensystem der roboterbasierten Produktionsumgebung (200) auf den mindestens drei Markierungselementen (128, 120, 132) platziert ist; und
Bestimmen (420) einer Position und einer Ausrichtung der ersten Komponente in einem Koordinatensystem der roboterbasierten Produktionsumgebung, basierend auf den Parametern, der Position und der Gruppe von Orten.

2. System nach Anspruch 1, wobei die Markierungselemente (128, 120, 132) Bohrungen sind.

3. System nach Anspruch 1 oder Anspruch 2, wobei die empfangenen Parameter des Kalibrierungsblocks einen Radius und eine Tiefe der Markierungselemente (128, 120, 132) umfassen.

4. System nach Anspruch 1, wobei das Dreieck ein rechtwinkeliges Dreieck ist.

5. System der Anspruch 1, wobei das Kalibrierungswerkzeug (150) ein Laserpointer ist.

6. System nach Anspruch 1, wobei die roboterbasierte Produktionsumgebung (200) eine Roboterbiegezelle ist, und die erste Komponente aus der Gruppe ausgewählt ist umfassend einen Ausrichtungstisch (204), eine Abkantpresse (216), eine Umgreifstation (224), eine Greiferwechselstation, eine Werkzeugwechselstation, eine Eingangspalette (232) und eine Ausgangspalette (236), und wobei die Roboterbiegezelle optional ferner eine Schiene (228) umfasst.

7. System nach Anspruch 1, wobei der Prozessor ferner dazu geeignet ist, einen Test zu generieren, um zu prüfen, ob ein in der roboterbasierten Produktionsumgebung (200) betriebener Roboter einen Zielpunkt der ersten Komponente erreichen kann.

8. Verfahren, durchgeführt von einer Verarbeitungsplattform, umfassend:
Empfangen (400) von Parametern eines Kalibrierungsblocks (100, 170) mit einer ebenen Fläche, wobei die ebene Fläche mindestens drei Markierungselemente (120, 128, 132) umfasst, die an drei Ecken von mindestens einem Dreieck angeordnet sind, wobei die Parameter Orte der Markierungselemente (128, 120, 132) relativ zu einem Kalibrierungsblockreferenzpunkt (118) des Kalibrierungsblocks sind;
Empfangen (412) einer Position des Kalibrierungsblockreferenzpunkts (118) relativ zu einem Komponentenreferenzpunkt (208) einer ersten Komponente einer roboterbasierten Produktionsumgebung, auf der der Kalibrierungsblock (100, 170) an einer vorbestimmten Position platziert ist;
Empfangen (416) einer Gruppe von Orten der mindestens drei Markierungselemente (120, 128, 132) des Kalibrierungsblocks, die eingenommen werden, wenn der Kalibrierungsblock (100, 170) auf der ersten Komponente positioniert ist, wobei die Gruppe von Orten, die von einem Kalibrierungswerkzeug (150) eingenommen werden, in einer vorbestimmten Reihenfolge und in einem Koordinatensystem der roboterbasierten Produktionsumgebung (200) auf den mindestens drei Markierungselementen (120, 128, 132) platziert ist; und
Bestimmen (420) einer Position und Ausrichtung der ersten Komponente in einem Koordinatensystem der roboterbasierten Produktionsumgebung, basierend auf den Parametern, der Position und der Gruppe von Orten.

9. Verfahren nach Anspruch 8, wobei die Markierungselemente (128, 120, 132) Bohrungen sind.

10. Verfahren nach Anspruch 8 oder Anspruch 9, wobei die empfangenen Parameter des Kalibrierungsblocks einen Radius und eine Tiefe der Markierungselemente (128, 120, 132) umfassen.

11. Verfahren nach Anspruch 8, wobei das Dreieck ein rechtwinkliges Dreieck ist.

12. Verfahren nach Anspruch 8, ferner umfassend das Analysieren eines von einer Aufnahmevorrichtung aufgenommenen Bildes zum Erhalten der Gruppe von Orten.

13. Verfahren nach Anspruch 8, ferner umfassend das Generieren eines Programms für den Übergang eines Roboters (211) zwischen zwei Positionen innerhalb der robotergestützten Produktionsumgebung, in der der Roboter (2110) ein bearbeitetes Blech auf die Abkantpresse (216) platziert, oder wobei optional

14. das Verfahren ferner das Wiederholen des Empfangens (400) der Parameter, des Empfangens (412) der Position, des Empfangens (416) der Gruppe von Orten und des Bestimmens (420) für eine zweite Komponente der roboterbasierten Produktionsumgebung umfasst.

15. Verfahren nach Anspruch 8, ferner umfassend das Generieren (424) eines Tests zum Prüfen, ob ein in der roboterbasierten Produktionsumgebung (200) betriebener Roboter (211) einen Zielpunkt der ersten Komponente erreichen kann.

16. Computerprogrammprodukt, umfassend ein nichtflüchtiges, computerlesbares Medium, das Programmieranweisungen enthält, die, wenn sie von einem Prozessor gelesen werden, den Prozessor zum Durchführen folgender Handlungen veranlassen:
Empfangen (400) von Parametern eines Kalibrierungsblocks (100, 170) mit einer ebenen Fläche, wobei die ebene Fläche mindestens drei Markierungselemente (128, 120, 132) umfasst, die an drei Ecken von mindestens einem Dreieck angeordnet sind, wobei die Parameter Orte der Markierungselemente (128, 120, 132) relativ zu einem Kalibrierungsblockreferenzpunkt (118) des Kalibrierungsblocks sind;
Empfangen (412) einer Position des Kalibrierungsblockreferenzpunkts (118) relativ zu einem Komponentenreferenzpunkt (208) einer ersten Komponente einer roboterbasierten Produktionsumgebung, auf der der Kalibrierungsblock (100, 170) an einer vorbestimmten Position platziert ist;
Empfangen (416) einer Gruppe von Orten der mindestens drei Markierungselemente des Kalibrierungsblocks, die eingenommen werden, wenn der Kalibrierungsblock (100, 170) auf der ersten Komponente positioniert ist, wobei die Gruppe von Orten, die von einem Kalibrierungswerkzeug (150) eingenommen werden, in einer vorbestimmten Reihenfolge und in einem Koordinatensystem der roboterbasierten Produktionsumgebung (200) auf den mindestens drei Markierungselementen (128, 120, 132) platziert ist; und
Bestimmen (420) einer Position und Ausrichtung der ersten Komponente in einem Koordinatensystem der roboterbasierten Produktionsumgebung, basierend auf den Parametern, der Position und der Gruppe von Orten.

## Revendications

1. Système comprenant :
un bloc d'étalonnage (100, 170) présentant une surface plane, la surface plane comprenant au moins trois éléments de marquage (128, 120, 132), situés aux trois coins d'au moins un triangle ; et
une plate-forme informatique (500) comprenant un processeur (504) utilisé pour calibrer un environnement de production robotisé (200) comprenant au moins un premier composant,
dans lequel le processeur( 504) est conçu pour :
recevoir (400) des paramètres du bloc d'étalonnage (100, 170), à savoir des emplacements des éléments de marquage (128, 120, 132) par rapport à un point de référence (118) du bloc d'étalonnage ;
recevoir (412) une position du point de référence de bloc d'étalonnage (118) par rapport à un point de référence de composant (208) d'un premier composant de l'environnement de production robotisé sur lequel le bloc d'étalonnage (100, 170) est placé à une position prédéterminée ;
recevoir (416) un ensemble d'emplacements des au moins trois éléments de marquage du bloc d'étalonnage pris lorsque le bloc d'étalonnage (100, 170) est positionné sur le premier composant, l'ensemble d'emplacements pris par un outil d'étalonnage (150) étant placé sur les au moins trois éléments de marquage (128, 120, 132) dans un ordre prédéfini et dans un système de coordonnées de l'environnement de production robotisé (200) ; et
sur la base des paramètres, de la position et de l'ensemble d'emplacements, déterminer (420) une position et une orientation du premier composant dans un système de coordonnées de l'environnement de production robotisé.

2. Système selon la revendication 1, dans lequel les éléments de marquage (128, 120, 132) sont des alésages.

3. Système selon la revendication 1 ou la revendication 2, dans lequel les paramètres reçus du bloc d'étalonnage comprennent un rayon et une profondeur des éléments de marquage (128, 120, 132).

4. Système selon la revendication 1, dans lequel la pièce est un triangle rectangle.

5. Système selon la revendication 1, dans lequel l'outil d'étalonnage (150) est un pointeur laser.

6. Système selon la revendication 1, dans lequel l'environnement de production robotisé (200) est une cellule de pliage robotisée, et le premier composant est choisi dans le groupe comprenant : une table d'orientation (204), une presse plieuse (216), un poste de nouvelle préhension (224), un poste de changement d'outil de préhension, un poste de changement d'outil, une palette d'entrée (232) et une palette de sortie (236), et éventuellement dans lequel la cellule de pliage robotisée comprend en outre un rail (228).

7. Système selon la revendication 1, dans lequel le processeur est en outre conçu pour générer un test permettant de tester si un robot fonctionnant dans l'environnement de production robotisé (200) peut atteindre un point cible du premier composant.

8. Procédé réalisé par une plate-forme de traitement, le procédé comprenant :
la réception (400) de paramètres d'un bloc d'étalonnage (100, 170) présentant une surface plane, la surface plane comprenant au moins trois éléments de marquage (120, 128, 132) situés aux trois coins d'au moins un triangle, les paramètres étant des emplacements des éléments de marquage (128, 120, 132) par rapport à un point de référence de bloc d'étalonnage (118) du bloc d'étalonnage ;
la réception (412) d'une position du point de référence du bloc d'étalonnage (118) par rapport à un point de référence de composant (208) d'un premier composant d'un environnement de production robotisé sur lequel le bloc d'étalonnage (100, 170) est placé à une position prédéterminée ;
la réception (416) d'un ensemble d'emplacements des au moins trois éléments de marquage (120, 128, 132) du bloc d'étalonnage pris lorsque le bloc d'étalonnage (100, 170) est positionné sur le premier composant, l'ensemble d'emplacements pris par un outil d'étalonnage (150) étant placé sur les au moins trois éléments de marquage (120, 128, 132) dans un ordre prédéfini et dans un système de coordonnées de l'environnement de production robotisé (200) ; et
sur la base des paramètres, de la position et de l'ensemble des emplacements, la détermination (420) d'une position et d'une orientation du premier composant dans un système de coordonnées de l'environnement de production robotisé.

9. Procédé selon la revendication 8, dans lequel les éléments de marquage (128, 120, 132) sont des alésages.

10. Procédé selon la revendication 8 ou la revendication 9, dans lequel les paramètres reçus du bloc d'étalonnage comprennent un rayon et une profondeur des éléments de marquage (128, 120, 132).

11. Procédé selon la revendication 8, dans lequel le triangle est un triangle rectangle.

12. Procédé selon la revendication 8, comprenant en outre l'analyse d'une image capturée par un dispositif de capture pour obtenir l'ensemble d'emplacements.

13. Procédé selon la revendication 8, comprenant en outre la génération d'un programme permettant la transition d'un robot (211) entre deux positions dans l'environnement de production robotisé, dans lequel le robot (2110) place une feuille traitée sur la presse plieuse (216), ou éventuellement

14. le procédé comprend en outre la répétition de ladite réception (400) des paramètres, ladite réception (412) de la position, ladite réception (416) de l'ensemble d'emplacements, et ladite détermination (420), pour un second composant de l'environnement de production robotisé.

15. Procédé selon la revendication 8, comprenant en outre la génération (424) d'un test pour vérifier si un robot (211) fonctionnant dans l'environnement de production robotisé (200) peut atteindre un point cible du premier composant.

16. Produit de programme informatique comprenant un support non transitoire lisible par ordinateur contenant des instructions de programme, lesquelles instructions, lorsqu'elles sont lues par un processeur, amènent le processeur à réaliser :
la réception (400) des paramètres d'un bloc d'étalonnage (100, 170) présentant une surface plane, la surface plane comprenant au moins trois éléments de marquage (128, 120, 132) situés aux trois coins d'au moins un triangle, les paramètres étant des emplacements des éléments de marquage (128, 120, 132) par rapport à un point de référence du bloc d'étalonnage (118) du bloc d'étalonnage ;
la réception (412) d'une position du point de référence du bloc d'étalonnage (118) par rapport à un point de référence de composant (208) d'un premier composant d'un environnement de production robotisé sur lequel le bloc d'étalonnage (100, 170) est placé à une position prédéterminée ;
la réception (416) d'un ensemble d'emplacements des au moins trois éléments de marquage du bloc d'étalonnage pris lorsque le bloc d'étalonnage (100, 170) est positionné sur le premier composant, l'ensemble d'emplacements pris par un outil d'étalonnage (150) étant placé sur les au moins trois éléments de marquage (128, 120, 132) dans un ordre prédéfini et dans un système de coordonnées de l'environnement de production robotisé (200) ; et
sur la base des paramètres, de la position et de l'ensemble des emplacements, la détermination (420) d'une position et d'une orientation du premier composant dans un système de coordonnées de l'environnement de production robotisé.
